(19) Europäisches Patentamt / European Patent Office / Office européen des brevets

(11) **EP 3 108 225 B1**

(12) **EUROPEAN PATENT SPECIFICATION**

(45) Date of publication and mention
of the grant of the patent:
**07.11.2018 Bulletin 2018/45**

(51) Int Cl.:
***G01N 27/30*** *(2006.01)*

(21) Application number: **15705067.5**

(22) Date of filing: **13.02.2015**

(86) International application number:
**PCT/GB2015/050398**

(87) International publication number:
**WO 2015/121658 (20.08.2015 Gazette 2015/33)**

(54) **ELECTROCHEMICAL METHOD AND APPARATUS FOR DETECTING PH**

ELEKTROCHEMISCHES VERFAHREN UND VORRICHTUNG ZUR ERKENNUNG DES PH-WERTS

PROCÉDÉ ÉLECTROCHIMIQUE ET APPAREIL DE DÉTECTION DE PH

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2014 GB 201402709**

(43) Date of publication of application:
**28.12.2016 Bulletin 2016/52**

(73) Proprietor: **Oxford University Innovation Limited
Botley
Oxford OX2 0JB (GB)**

(72) Inventors:
• **COMPTON, Richard Guy
Oxford
Oxfordshire OX1 3QZ (GB)**
• **LU, Min
Oxford
Oxfordshire OX1 3QZ (GB)**

(74) Representative: **Haseltine Lake LLP
Redcliff Quay
120 Redcliff Street
Bristol BS1 6HU (GB)**

(56) References cited:
**WO-A1-92/19961      DE-A1- 10 108 539**

• DUESSEL HEIKE ET AL: "A solid composite pH sensor based on quinhydrone", ELECTROANALYSIS, VHC PUBLISHERS, INC, US, vol. 7, no. 9, 1 January 1995 (1995-01-01) , pages 889-894, XP002613793, ISSN: 1040-0397, DOI: 10.1002/ELAN.1140070917
• BANKS C E ET AL: "Edge plane pyrolytic graphite electrodes in electroanalysis: an overview", BUNSEKI-KAGAKU = ANALYTICAL CHEMISTRY, JAPAN SOCIETY FOR ANALYTICAL CHEMISTRY, TOKYO, JP, vol. 21, no. 11, 1 November 2005 (2005-11-01), pages 1263-1268, XP002373252, ISSN: 0910-6340, DOI: 10.2116/ANALSCI.21.1263 cited in the application
• JANKOWSKA H ET AL: "Investigations of the electrochemical properties of activated carbon and carbon black", ELECTROCHIMICA ACTA, ELSEVIER SCIENCE PUBLISHERS, BARKING, GB, vol. 26, no. 12, 1 December 1981 (1981-12-01), pages 1861-1866, XP026515776, ISSN: 0013-4686, DOI: 10.1016/0013-4686(81)85176-6 [retrieved on 1981-12-01]
• HEIKE KAHLERT: "Functionalized carbon electrodes for pH determination", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 12, no. 10, 13 June 2008 (2008-06-13) , pages 1255-1266, XP019593286, ISSN: 1433-0768

Remarks:
The file contains technical information submitted after the application was filed and not included in this specification

**Description**

Field of the Invention

The present invention relates to an electrochemical method and apparatus for use in determining pH in a sample.

Background

The determination of pH is fundamental to the study of chemical and biochemical reactions in aqueous solution, with measurements carried out extensively in both industrial and academic environments. Its widespread application includes uses in the food industry, agriculture, the biopharmaceutical industry, medicine and water treatment.

pH sensors are either potentiometric or amperometric. At present, the use of glass electrodes is the most common potentiometric approach due to their high sensitivity and selectivity, reasonably fast response, availability from commercial sources, and if carefully handled, long lifetimes. They are, however, fragile due to their glass nature and can be impractical to use for "in-field" analysis. In addition, glass electrodes can suffer from instability and potential drift as a result of decreased sensitivity towards hydrogen activity caused by dehydration of the glass membrane. They also suffer from "alkali errors". This approach requires regular and frequent re-calibration prior to use. Amperometric pH sensors utilising polymer films, enzymes and organic redox species have been explored to address the various drawbacks related to potentiometric sensing.

The article of H. Düssel et. al., in Electroanalysis 1995, 7, no. 9, p. 889-894 describes a solid composite pH sensor made from quinhydrone, solid paraffin and surface-modified graphite powder.

It would be advantageous to provide an alternative to or an improvement upon pH sensors of the prior art.

Brief Description of the Figures

The Figures illustrate results from the Examples or items discussed herein.

Figure 1 shows schematically 3 pathways in which an orthoquinone molecule can be reduced in a 2e$^-$ fashion with m = 0, 1 or 2.

Figure 2 shows various functional groups present on graphitic carbon surfaces, particularly at the edge of a plane of carbon atoms.

Figure 3 shows a typical cyclic voltammogram (CV) of edge plane pyrolytic graphite (EPPG) in 0.01 M HNO$_3$ + 100 mM KCl supporting electrolyte, from which surface coverage of quinone groups can be calculated.

Figures 4a, 4b and 4c show quinone reduction peaks in square wave voltammetry (SWV) for EPPG. 3 sets of peaks are shown, corresponding to the different media in which the reduction was performed; in Figure 4a) 0.01 M HCl/KCl buffer and citrate buffer (pHs: 2.11, 2.62, 2.99, 3.88, 4.93), 0.1 M HCl/KCl buffer at pH 1.09 in Figure 4b) 0.01M phosphate buffer (pHs: 5.62, 6.60, 7.56, 8.38), and in Figure 4c) 0.01M carbonate buffer and NaOH solutions (pHs: 9.39, 10.61, 12.04, 12.93). SWV performed under conditions: frequency - 150 Hz, step potential - 2 mV, amplitude - 200 mV.

Figure 5 shows quinone reduction peaks in square wave (SWV) for EPPG. Reduction peaks were obtained in different media (HCl/KCl buffer, citrate buffer, phosphate buffer, carbonate buffer and NaOH buffer solutions) at 0.01 M, ranging in pH from 2.11 to 12.93, 0.1 M HCl/KCl buffer at pH 1.09. SWV performed under conditions: frequency - 150 Hz, step potential - 2 mV, amplitude - 200 mV.

Figure 6 shows a calibration plot of SWV peak potential against pH for an EPPG in 0.01 M buffer solutions (with 0.1M HCl/KCl buffer solution at pH 1.09), showing a linear response with gradient of 57.0 mV / pH corresponding to a Nernstian behaviour. Squares: low pH range, circles: neutral pH range, triangles: high pH range.

Figures 7a and 7b shows reduction peaks on EPPG electrode in 0.01 M phosphate buffer solution: Figure 7a) shows reduction peaks with amplitude 20 mV, whereas Figure 7b) shows the peak under optimised conditions of amplitude 200 mV.

Figure 8 shows a calibration plot showing both peak 1 and peak 2 of the double peak reduction (of Figure 7) in 0.01 M phosphate buffer with amplitude 20 mV. Calibrations for the reductions performed at 200 mV are shown as blue triangles, intermediate of the 2 peaks at 20 mV amplitude.

Figure 9 shows reduction peaks of EPPG in 0.1 M buffer solutions (pH 2.80 citrate buffer solution, pH 6.56 phosphate buffer solution, pH 11.24 carbonate buffer solution).

Figure 10 shows a calibration plot of the reduction peaks in 0.1 M buffer solutions. The square corresponds to citrate buffer, the circle corresponds to phosphate buffer and the triangle corresponds to carbonate buffer.

Figure 11 shows a calibration plot of the original reduction points in 0.01 M buffer solutions (squares), with reduction points of 0.1 M buffer solutions (triangles) added for comparison.

Figure 12 shows quinone reduction peaks in square wave (SWV) for EPPG, carried out at 37 °C.

Figure 13 shows a calibration plot for the results shown in Figure 12.

Summary of Invention

In a first aspect, the present invention provides a method for detecting pH, the method comprising:

providing an electrode comprising a carbon material having at least one plane of carbon atoms, wherein the plane of carbon atoms has been oxidised at its edge, such that quinone structures or hydroquinone structures form part of the plane and are present at the edge of the plane,
contacting a sample with the quinone or hydroquinone structures of the plane of carbon atoms,
carrying out an electrochemical test to reduce the quinone structures or oxidise the hydroquinone structures and determine the potential at which the reduction of the quinone structures occurs or at which the oxidation of the hydroquinone structures occurs,
using the potential at which the reduction or oxidation occurs to calculate the pH of the sample.

In a second aspect, there is provided an apparatus for detecting pH, the apparatus comprising an electrode comprising a carbon material having at least one plane of carbon atoms, wherein the plane of carbon atoms has been oxidised at its edge, such that quinone structures or hydroquinone structures form part of the plane and are present at the edge of the plane, the apparatus adapted to:

contact a sample with the quinone or hydroquinone structures of the plane of carbon atoms of the carbon material,
carry out an electrochemical test to reduce the quinone structures or oxidise the hydroquinone structures and determine the potential at which the reduction of the quinone structures occurs or at which the oxidation of the hydroquinone structures occurs,
use the potential at which the reduction or oxidation occurs to calculate the pH of the sample.

The present inventors have found that quinone or hydroquinone structures present at the edge of the planes of certain carbon materials can be used as electrochemical indicators of pH. They found that, in some carbon materials, there is a sufficient amount of inherently-present quinones for the pH to be determined from their reduction in the present method. Accordingly, the chemical modification of the carbon materials to introduce pH-sensitive redox species is not required, which simplifies the production of electrochemical pH sensors. In an embodiment, the electrode comprising the carbon material may have been subjected to a pre-treatment (i.e. a treatment before contact with the sample) to increase the number of quinone structures (e.g. from the level that may be present due to atmospheric oxidation alone), and hence increase the electrochemical signal in the electrochemical test. The pre-treatment may involve, for example, chemical and/or electrochemical oxidation of the carbon material. In some embodiments, quinone groups in the carbon material have been reduced before the electrochemical test is carried out, e.g. in reducing media, such that hydroquinone groups are formed. In the electrochemical test, the hydroquinone groups would be oxidised. Reducing media include, but are not limited to, slurry found in an anaerobic biogas digester. The present inventors also found that quinones that form part of the carbon planes behave, in electrochemical reduction, in a different manner to free quinone molecules in solution. While not being bound by theory, it is believed that this different behaviour is due to the different pKa of quinones (and the species formed by their reduction) when they form part of a plane of carbon atoms, compared to free molecules in solution. This allows the present method to be used over a broad pH range. It is also advantageous and surprising that the relationship between pH and peak potentials in voltammetry experiments is linear over a very broad range, e.g. from pH 1 to 13. Additionally, the carbon electrodes can be used in harsh environments, and are not as delicate as the glass-based pH sensors of the prior art.

The present invention provides the first and second aspects mentioned above. Optional and preferred features of the various aspects are described below. Unless otherwise stated, any optional or preferred feature may be combined with any other optional or preferred feature, and with any of the aspects of the invention mentioned herein.

The method and apparatus described herein use an electrode comprising a carbon material having at least one plane of carbon atoms, wherein the plane of carbon atoms has been oxidised at its edge, such that quinone or hydroquinone structures form part of the plane. The carbon material may be selected from edge plane pyrolytic graphite, graphene, basal plane pyrolytic graphite, glassy carbon and carbon microfibres. The electrode may be an edge plane pyrolytic graphite electrode or a graphene electrode. Both edge plane pyrolytic graphite and graphene comprises at least one plane of carbon atoms. Graphene can be considered to be material having a single plane of carbon atoms. Graphite contains a plurality of planes of carbon atoms. In both graphite and graphene, the carbon atoms are arranged in a hexagonal array, which is sometimes termed a honeycomb lattice.

Edge plane pyrolytic graphite (EPPG) is a material made from highly ordered pyrolytic graphite (HOPG). The edge plane pyrolytic graphite is cut across the planes of graphite such that the edge plane is exposed. In an electrode, if edge plane pyrolytic graphite is used, it is the edge plane that is exposed to contact a sample, and generally forms the largest exposed face of the electrode. This contrasts with basal plane pyrolytic graphite (BPPG), which is also formed from HOPG, but which has been cut along the planes of carbon atoms (the basal plane). In an electrode, if BPPG is used, the basal plane of the graphite is exposed to contact a sample, and generally forms the largest exposed face of the electrode. Edge and basal plane graphite electrodes are described in more detail in prior publications, including, but not limited to, a paper by Banks, C.E. and Compton, R.G, in the Analyst, 2006, 131, 15-21, Box 2 on page 16.

In an example, the carbon material comprises edge plane pyrolytic graphite. In an embodiment, the carbon material comprises graphite powder that comprises edge plane pyrolytic graphite, which may further comprise basal plane pyrolytic graphite. The content of edge plane pyrolytic graphite in the graphite powder may be at least 5 wt %, optionally at least 10 wt%, optionally at least 20 wt%, optionally at least 30 wt%, optionally at least 40 wt%, optionally at least 50 wt%, optionally at least 60 wt%, optionally at least 65 wt%, optionally at least 70 wt%, optionally at least 75 wt%, optionally at least 80 wt%, optionally at least 85 wt%, optionally at least 90 wt%, optionally at least 95 wt%. The content of EPPG and BPPG can be determined from, for example, scanning electron microscopy, scanning probe microscopy or scanning tunnelling microscopy.

In an embodiment, the carbon material comprises a single crystal of edge plane pyrolytic graphite.

In an embodiment, the carbon material has been prepared from highly ordered pyrolytic graphite, which has been cut across its edge plane, and, optionally, polished on its edge plane, and before, during or after the cutting and/or the polishing, the carbon material has been exposed to oxygen, e.g. in the form of air, but preferably has not been otherwise chemically modified. The edge plane of the highly ordered pyrolytic graphite that has been cut and/or polished is the plane that has been oxidised at its edge, such that quinone or hydroquinone structures form part of the plane. The edge plane is the plane that contacts the sample, and, will, usually, form the largest electrically-conducting surface of the electrode. The pyrolytic graphite from which the carbon material, e.g. EPPG, is formed may be of ZYA, ZYB or ZYH grade. Such grades are known in the art. Pyrolytic graphite can be graded using mosaic spread. The mosaic spread is a measurement of the full width at half maximum intensity of the reflection of an x-ray beam from a sample of HOPG material when tilted in a preferred orientation thereby forming a preferred orientation x-ray diffraction curve known as a "rocking curve". The rocking curve is a graph of the intensity of the reflected x-rays as a function of the angular distance from a reference plane using Bragg's Law to determine the angular deviation. The rocking curve is determined for each HOPG sample so that its mosaic spread can be categorized into different standard mosaic spread ranges. Measurement of mosaic spread is described in other publications, including, but not limited to, US 5,798,075, which is incorporated herein by reference in its entirety. The value of mosaic spread may be 5° or less, optionally 4° or less, optionally 3° or less, optionally 2° or less, optionally 1° or less, optionally 0.8° or less, optionally 0.5° or less, optionally 0.4° or less, optionally 0.3° or less, optionally 0.2° or less, optionally 0.1° or less. The value of mosaic spread may be about 3.5° or about 0.8° or about 0.4°.

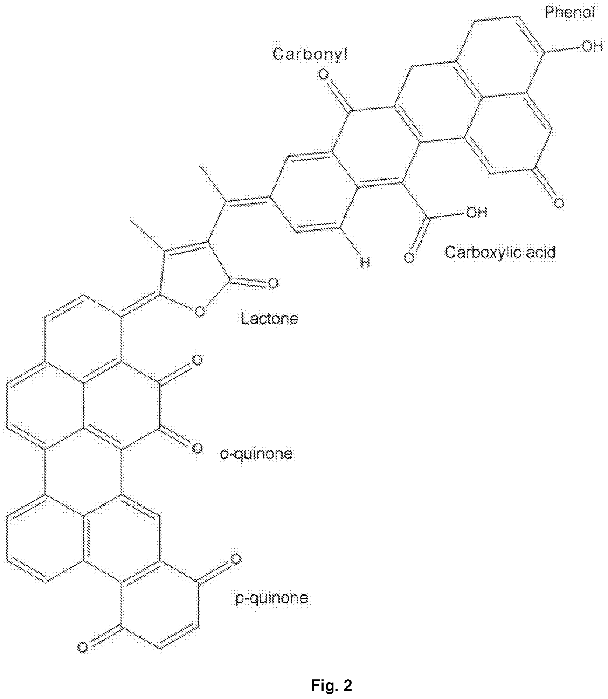

A quinone structure can be defined as a structure having six carbons in a ring, with at least two of the carbons each forming part of a carbonyl group. The carbonyl groups may be ortho-to one another (i.e. on adjacent carbons in 1- and 2-positions on the six-ring) or para- to one another (i.e. opposite one another on in the six-ring, in 1- and 4-positions). Ortho-quinone (o-quinone) and para-quinone (p-quinone) structures are shown in Figure 2. In the present application, the quinone structures form part of the plane of carbon atoms, i.e. such that the six-ring of carbon atoms having the two carbonyl groups is covalently bonded to a hexagonal array of carbons that form a plane of carbons in the carbon material.

A hydroquinone structure can be defined as a structure having six carbons in a ring, with at least two of the carbons being covalently bonded to hydroxyl (OH) groups. Hydroquinone structures can result from the reduction of quinone structures, e.g. in reducing media. The hydroxy groups may be otho- to one another (i.e. on adjacent carbons in 1- and 2-positions on the six-ring) or para- to one another (i.e. opposite one another on in the six-ring, in 1- and 4-positions). Ortho-hydroquinone (o-hydroquinone) and para-hydroquinone (p-hydroquinone) structures would result, respectively, from the reduction of the o-quinone and p-quinone structures shown in Figure 2. In the present application, the hydroquinone structures form part of the plane of carbon atoms, i.e. such that the six-ring of carbon atoms having hydroxyl groups attached is covalently bonded to a hexagonal array of carbons that form a plane of carbons in the carbon material.

The method involves contacting a sample with the quinone or hydroquinone structures of the plane of carbon atoms. The sample may be an aqueous sample. The sample may be a sample from an outdoor water source, such as a river, lake or sea. The sample may be a sample from a chemical processing laboratory, factory or site. The sample may be from the waste of an industrial process. The sample may be an effluent sample, i.e. a discharge of liquid waste, for example sewage. The sample may be a downhole fluid sample. A downhole fluid sample may be a sample obtained from a borehole, such as a borehole that may be made during oil and/or gas exploration and production, and/or a subterranean source of water. In an embodiment, the sample is not a downhole fluid sample. The method may be carried out at or near the source of the sample.

In an embodiment, if quinone structures are present in the carbon material, the method involves carrying out an electrochemical test to reduce the quinone structures and determine the potential at which the reduction of the quinone structures occurs. In an embodiment, if hydroquinone structures are present in the carbon material, the method involves carrying out an electrochemical test to oxidise the hydroquinone structures and determine the potential at which the oxidation of the hydroquinone structures occurs. The reduction of the quinone structures may involve the addition of 1 or 2 electrons and, in some embodiments, 1 or 2 protons per quinone structure, optionally 2 electrons and 2 protons per quinone structure. The potential at which the reduction of the quinone structures or oxidation of the hydroquinone structures occurs may be measured by any suitable technique. The potential at which the reduction of the quinone structures or oxidation of the hydroquinone structures occurs may be measured using a voltammetry technique, for example which uses a working electrode, a counter electrode, and, if desired, a reference electrode, for example in a potentiostat. A potential may be applied between a working electrode, which is the electrode comprising the carbon material having at least one plane of carbon atoms, and a counter electrode, and the resulting current measured, e.g. using a potentiostat.

In a preferred embodiment, the potential at which the reduction of the quinone structures occurs or at which the oxidation of the hydroquinone structures occurs is measured by a pulse voltammetry method, including, but not limited to sampled current polarography, differential pulse voltammetry, normal pulse voltammetry, and square wave voltammetry.

The potential at which the reduction of the quinone structures or oxidation of the hydroquinone structures occurs may be determined by, for example, a voltammetry method, e.g. a pulse voltammetry method such as a square wave voltammetry method, in which a peak in current is seen at the potential at which the reduction of the quinone structures occurs or at which the oxidation of the hydroquinone structures occurs; such a potential may be termed a peak potential herein.

In an embodiment, the conditions for carrying out the square wave voltammetry use a frequency of from 0.1 to 300 Hz, optionally from 50 to 250 Hz, optionally from 100 to 200 Hz, optionally about 150 Hz; and/or a step potential of from 0.01 to 5 mV, optionally from 0.5 to 4 mV, optionally from 1 to 3 mV, optionally about 2 mV; and/or an amplitude of at least 1 mV, optionally at least 10 mV, optionally at least 20 mV, optionally at least 50 mV, optionally at least 100 mV, optionally at least 150 mV, optionally at least 180 mV, optionally at least 200 mV, optionally in the range of from 50 mV to 300 mV, optionally in the range of 100 mV to 300 mV, optionally in the range of 150 mV to 250 mV, optionally in the range of 180 mV to 220 mV, optionally about 200 mV.

The voltammetry may be carried out so that the potential at the electrode having the quinone or hydroquinone structures is swept from a first value to a second value. For example, in the reduction of the quinone structures, the first value may be about +0.4 V or more (i.e. more positive), e.g. a value of +0.4 to +0.6 V and the second value may be about -0.2 V or less (i.e. less positive), e.g. a value of about -0.4 V or less, optionally a value of -0.2 V to -0.6 V. For example, in the oxidation of the hydroquinone structures, the first value may be about -0.2 V or less (i.e. less positive), e.g. a value of about -0.4 V or less, optionally a value of -0.2 V to -0.6 V, and second value may be about +0.4 V or more (i.e. more positive), e.g. a value of +0.4 to +0.6 V.

In an embodiment, a predetermined relationship between the potential at which the reduction of the quinone or oxidation of the hydroquinone structures occurs and pH is used to calculate the pH of the sample. The predetermined relationship may have been determined in a calibration step. The calibration step should have been carried out at the same temperature as the electrochemical test.

In an embodiment, the method involves a calibration step to determine a relationship between known pHs in calibration samples and the potential at which the reduction of the quinone structures occurs or oxidation of the hydroquinone structures occurs, and this relationship is used to convert the difference between the measured potential at which the reduction of the quinone structures occurs or at which the oxidation of the hydroquinone structures occurs, in the sample in the method to a value of pH.

In an embodiment, the carbon material is associated with a redox active material that is insensitive to a change in pH. In an embodiment, if a redox active material is 'insensitive to a change in pH', this indicates that the potential at which the redox active material is oxidised or reduced, e.g. the potential at a peak of current in a voltammetry experiment, does not change with a change of pH of a sample that is in contact with the redox active material (e.g. over a pH range of from 3 to 9, preferably from 1 to 14). In an embodiment, the difference in potential between the oxidation or reduction of the redox active material that is insensitive to a change in pH and the potential at which the reduction of the quinone structures of the plane of carbon atoms occurs or at which the oxidation of the hydroquinone structures occurs, is used to calculate the pH, e.g. with the potential of the oxidation or reduction of the redox active material being used as a reference. In an embodiment, the difference in potential between the oxidation or reduction of the redox active material that is insensitive to a change in pH and the potential at which the reduction of the quinone structures of the plane of carbon atoms occurs or at which the oxidation of the hydroquinone structures occurs is used to calculate the pH, with the relationship between the difference and pH having been determined in a calibration step. The redox active material that is insensitive to a change in pH may be selected from a ferrocene, a polythiophene, a viologen, a ferricyanide or a ferricyanide salt, octacyanomolybdate (IV) salts. The ferrocene may be selected from, for example, ferrocenyl thiol, and polyvinyl ferrocene. The viologen may be selected from a viologen having a di-substituted, e.g. di-N-substituted 4,4'-bipyridyl moiety, e.g. a di-alkyl N-substituted 4,4'-bipyridyl moiety and a polyviologen, and derivatives thereof. The redox active material that is insensitive to a change in pH may be associated with the carbon material; and "associated with" may indicate that the redox active material is adsorbed onto or into the carbon material or covalently bonded to the carbon material or in electrical connection with the carbon material. In an embodiment, the redox active material that is insensitive to a change in pH is present on a different electrode to that having the carbon material. The use of chemically insensitive (e.g. pH insensitive) redox active materials is discussed, for example, in WO 2005/085825 and US 5,223,117.

In an embodiment, the predetermined relationship is as stated in formula (a)

$$E = C - n(pH) \hspace{8cm} \text{formula (a),}$$

wherein E is the potential at which the reduction of the quinone structures occurs or at which the oxidation of the hydroquinone structures occurs, C is constant and n is a coefficient, with C and n having been determined in a calibration step and (pH) is the value of pH of the sample. In alternative embodiment, E is the difference between the potential at which the reduction of the quinone structures occurs or at which the oxidation of the hydroquinone structures occurs and a reference potential, e.g. the potential at which a redox active material that is insensitive to a change in pH is oxidised or reduced. In an alternative embodiment, if desired, higher order polynomials may be used for the relationship between the difference between the potential at which the reduction of the quinone structures occurs or at which the oxidation of the hydroquinone structures occurs and pH.

The calculating of the pH from the potential at which the reduction of the quinone structures occurs or at which the oxidation of the hydroquinone structures occurs may be carried out automatically using an appropriate calculation medium, which may be a computer program. The computer program may be stored/distributed on a suitable medium, such as an optical storage medium or a solid-state medium supplied together with or as part of the apparatus for detecting pH, but may also be distributed in other forms, such as via the Internet or other wired or wireless telecommunication systems.

In an alternative embodiment, the potential at which the reduction of the quinone structures occurs or at which the oxidation of the hydroquinone structures occurs (or the difference between this potential and a reference potential, as described above) can be compared against a database containing calibrated values of the potential at which the reduction of the quinone structures occurs or at which the oxidation of the hydroquinone structures occurs (or the difference between this potential and a reference potential, as described above) at a range of known pHs, to give a value for the pH of the sample.

In an embodiment, the method involves a calibration step to determine a relationship between known pH, e.g. in one or more calibration samples, and the potential at which the reduction of the quinone structures of the electrode occurs or at which the oxidation of the hydroquinone structures occurs, and this relationship is used to convert the potential at which the reduction of the quinone structures occurs or at which the oxidation of the hydroquinone structures occurs, determined in the method, to the value of pH in the sample. The one or more calibration samples are samples suitable for carrying out a calibration of the method and/or apparatus. For example, the one or more calibration samples may comprise a liquid that is the same as a liquid in the sample on which the electrochemical test is carried out. The one or more calibration samples and the sample on which the electrochemical test is carried out may all be aqueous samples. The calibration samples may contain one or more buffers for controlling the pH in a desired range.

The calibration step may be an automatic calibration step carried out by the apparatus described herein. In an embodiment, a calibration step is carried out before each electrochemical test on the sample that involves reduction of the quinone structures or oxidation of the hydroquinone structures. However, in an embodiment, e.g. an embodiment in which the carbon material is associated with a redox active material that is insensitive to a change in pH, the potential at which this redox active material is oxidised or reduced is used as a reference potential, against which the potential at which the reduction of the quinone structures occurs or at which the oxidation of the hydroquinone structures occurs is compared and the difference between these potentials is used to calculate pH; in such an embodiment, there is far less of a need to calibrate before each electrochemical test on a sample, and a single calibration may serve to provide data that can be used in a plurality of electrochemical tests on one or more samples.

In an embodiment, the electrochemical test is carried out at a temperature of at least 0 °C, optionally 10 °C or more, optionally 20 °C or more, optionally 30 °C or more, optionally 40 °C or more, optionally 50 °C or more. In an embodiment, the electrochemical test is carried out at a temperature of from 0 °C to 100 °C, optionally at a temperature of from 10 °C to 80 °C, optionally at a temperature of from 20 °C to 50 °, 20 °C to 30 °, optionally at a temperature of from 30 °C to 50 °, optionally at a temperature of from 30 °C to 40 °.

In an embodiment, the carbon material is unmodified. "Unmodified" may indicate that the carbon material, e.g. edge plane pyrolytic graphite or glassy carbon, is pure or substantially pure, aside from oxidation of the carbon atoms at the edge of the plane. In an embodiment, the carbon material is not associated with any species that does not form part of the plane of carbon atoms and that is a redox active material sensitive to a change in pH; in other words, the carbon material may lack or substantially lack redox active materials that are sensitive to a change in pH other than species formed from the oxidation of carbon atoms at the edge of the plane of carbons in the carbon material. In an embodiment, the carbon material is edge plane pyrolytic graphite that is substantially pure, aside from oxidation of the carbon atoms at the edge of the plane.

In an embodiment, the carbon material is edge plane pyrolytic graphite, the method involves a square wave voltammetry technique and a peak of current is seen in the voltammetry technique at the potential at which the reduction of the quinone structures occurs or at which the oxidation of the hydroquinone structures occurs.

In an embodiment, the method may be used to determine a pH in the range of 1 to 14.

Also provided herein is an apparatus for detecting pH, the apparatus comprising an electrode comprising a carbon material having at least one plane of carbon atoms, wherein the plane of carbon atoms has been oxidised at its edge, such that quinone structures or hydroquinone structures form part of the plane and are present at the edge of the plane, the apparatus adapted to:

contact a sample with the quinone or hydroquinone structures of the plane of carbon atoms of the carbon material, carry out an electrochemical test to reduce the quinone structures or oxidise the hydroquinone structures and determine the potential at which the reduction of the quinone structures occurs or at which the oxidation of the hydroquinone structures occurs,

use the potential at which the reduction or oxidation occurs to calculate the pH of the sample.. The apparatus may be further adapted to carry out a method as described herein. "Adapted to" may indicate "programmed to".

The apparatus for detecting pH may comprise working and counter electrodes, and, optionally, a reference electrode, and the working electrode is the electrode comprising a carbon material having at least one plane of carbon atoms, wherein the plane of carbon atoms has been oxidised at its edge, such that quinone or hydroquinone structures form part of the plane. The sample, in use, is able to contact the working electrode, and the working electrode, counter electrode, and, if present, reference electrode, are used to determine the potential at which the reduction of the quinone structures occurs or at which the oxidation of the hydroquinone structures occurs. The sample may be as described herein, and may be present in the apparatus in a receptacle.

The apparatus for detecting pH may comprise a separable device that can control the apparatus for detecting pH such that it carries out the method described herein; and optionally the separable device may carry out the calculating of the pH as described herein. The apparatus for detecting pH and/or separable device may contain an appropriate computer program for controlling the apparatus for detecting pH and/or separable device, such that the method as described herein is carried out. The computer program may be on suitable hardware, firmware or other storage medium that may form part of the apparatus for detecting pH and/or the separable device.

The electrodes described herein, e.g. for use in the method, apparatus for detecting pH and/or the electrochemical sensor, may be any suitable electrodes. The shape and configuration of the electrodes is not particularly restricted. The electrodes may be in the form of points, lines, rings and flat planar surfaces. In an embodiment, the working electrode and the counter electrode are disposed opposite one another within a housing. In an alternative embodiment, the working and reference electrodes are disposed on the same face of a substrate. In an embodiment, the electrodes are disposed on the same face of the substrate and form an interlocking pattern.

The electrode comprising the carbon material having at least one plane of carbon atoms, e.g. the working electrode in the apparatus, is such that the surface area of the electrode, which may be entirely edge plane, is preferably from 10 $\mu$m$^2$ to 0.1 m$^2$, more preferably from 50 $\mu$m$^2$ to 0.1 m$^2$, and more preferably from 500 $\mu$m$^2$ to 0.1 m$^2$.

Optionally, the ratio of the surface area of the working electrode to the surface area of the counter electrode is from 1:10 to 10:1, more preferably from 1:5 to 3:1. In some embodiments, the surface area of the counter electrode is greater than that of the working electrode.

In the method or apparatus for detecting pH, the electrodes may each be supported on a substrate, which may form part of a housing optionally enclosing the electrodes and any carrier medium or electrolyte that is in contact with the electrodes. The substrate and/or housing may comprise any inert, non-conducting material, which may be selected from, but is not limited to, ceramic, plastic and glass.

The counter and, if present, reference electrodes may each comprise any suitable electrically conducting material, e.g. a metal, an alloy of metals and/or carbon. The counter and, if present, reference electrodes may comprise a transition metal, for example a transition metal selected from any of groups 9 to 11 of the Periodic Table. The working, counter and, if present, reference electrode may each independently comprise a metal selected from, but not limited to, rhenium, iridium, palladium, platinum, copper, indium, rubidium, silver and gold. "Reference electrode" includes within its meaning herein pseudo-reference electrodes and standard reference electrodes, including, but not limited to, a calomel electrode or a silver/silver chloride electrode.

**Examples**

In the Examples below, the present inventors exploit the *intrinsic* presence of quinone groups available on EPPG surfaces and use cyclic voltammetry (CV) and square wave voltammetry (SWV) to study the effect of pH on the reduction of the surface quinones.

Experimental

(a) Apparatus

All voltammetric measurements were recorded using a $\mu$-Autolab-II computer controlled potentiostat (Metrohm-Autolab BV), and operated by GPES software. A standard three-electrode configuration consisting of a saturated calomel reference electrode (SCE) (Hach Lange, UK), a platinum (Pt) mesh counter electrode and an edge plane pyrolytic graphite (EPPG) working electrode was used throughout. The EPPG electrode was made from pieces of highly ordered pyrolytic graphite (HOPG) (Le Carbone Ltd., Sussex, U.K.) of SP13 (ZYH) grade, and machined to discs 4.9 mm in diameter and 0.5 mm in length. By orientating the disc face perpendicular to the graphite crystal surface, an edge plane was achieved; these were then set in custom made PTFE housing with an electrical connection made using a stainless steel core.

All pH measurements were conducted using a pH213 Microprocessor pH meter (Hanna instruments, UK). Prior to the measurement of solutions, the pH meter was calibrated using Duracal buffers of pH 4.01 $\pm$ 0.01, pH 7.00 $\pm$ 0.01 and pH 10.01 $\pm$ 0.01 (Hamilton, CH). Using a 2 point calibration, the manufacturer's specifications state a working range of pH -2.0 to 16.0.

All experiments were performed within a thermostatted Faraday cage (made in-house), to maintain a constant working temperature of 298 K. Temperature of the solutions were maintained at 298 $\pm$ 2 K throughout by placing the solutions within the Faraday cage for two hours to ensure thermal equilibrium. A constant temperature of 298 K was used to ensure that the reduction potential of the peaks do not shift with temperature. A thermometer was used for measurement of the solution during the experiment.

(b) Reagents and solutions

All chemicals used were of analytical grade and were used as received without further purification. Solutions were prepared with deionized water and had resistivity no less than 18.2 MΩ.cm at 25°C (Millipore, UHQ, Vivendi, UK).

The buffer solutions were prepared using HCl/ KCl for the pH range 0.0 - 2.5, citric acid/ sodium citrate for the pH range 2.5 - 5.0, monosodium phosphate/ disodium phosphate for the pH range 5.0 - 9.0, sodium carbonate/ bicarbonate for the pH range 9.0 - 11.0, and sodium hydroxide for the pH range 12.0 - 13.0. All solutions were made with supporting electrolyte of 100 mM KCl added to each solution. Measurement of the pH was carried out on each freshly made solution prior to experiments.

All measurements were carried out in a degassed system where solutions were purged with pure $N_2$ gas (BOC, Guildford UK) prior to experiments for a minimum of 20 minutes in a seal tight environment.

(c) Experimental procedure

A range of buffer solutions were prepared and their pH determined using a pH meter prior to experiments. A small volume of each solution was taken and transferred into an electrochemical cell where a degassed system was established through thorough bubbling of pure $N_2$ into the vessel to remove dissolved oxygen in solution. The platinum mesh counter electrode was flamed before the experiment to ensure a clean set-up. The system was thermostatted to maintain temperature at 295 $\pm$ 2 K.

The surface of the EPPG electrodes were thoroughly polished using alumina slurry (Buehler Ltd) on soft lapping pads of decreasing grades, from 1.0 $\mu$m to 0.3 $\mu$m and finally 0.01 $\mu$m, followed by sonication and thorough rinsing using Millipore water. With the EPPG electrode acting as working electrode, cyclic voltammograms were performed to observe the redox properties of the surface quinones. However, optimised results were achieved by observing reductive cathodic scans with square wave voltammetry to more precisely determine the location of the peak potential. The optimised parameters for SWV were: frequency - 150 Hz, step potential - 2 mV, amplitude - 200 mV, over the entire pH range explored. The EPPG was used to scan in the cathodic direction, with the potential window adjusted for different pHs to best observe the reduction peak.

## Results and discussions

### Example 1

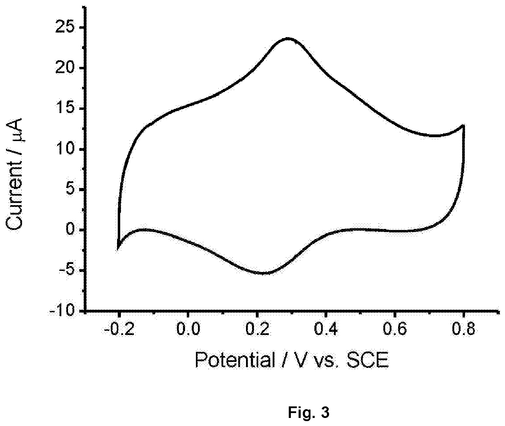

Initially, a cyclic voltammogram (CV) was recorded of the bare EPPG surface; a typical CV signal performed in 0.01 M $HNO_3$ with 100 mM KCl supporting electrolyte can be seen in Figure 3, with the peak potential of the quinone reduction occurring at 221 mV vs. SCE. From this, the surface coverage can be deduced by using the peak area of the reduction peak to determine the quinone surface coverage, according to $Q = nFA\Gamma$, where $\Gamma$ represents the surface coverage, n represents the number of electrons transferred per molecule, F is the Faraday constant and A is the electrode area. The average value for the surface coverage of quinones was calculated to be $5.9 \times 10^{-11} \pm 0.6 \times 10^{-11}$ mol cm$^{-2}$, with n = 2. After establishing optimised parameters for the cathodic scans of the surface quinone reduction in square wave, all analyses were performed on the respective square wave voltammetric results.

### Example 2

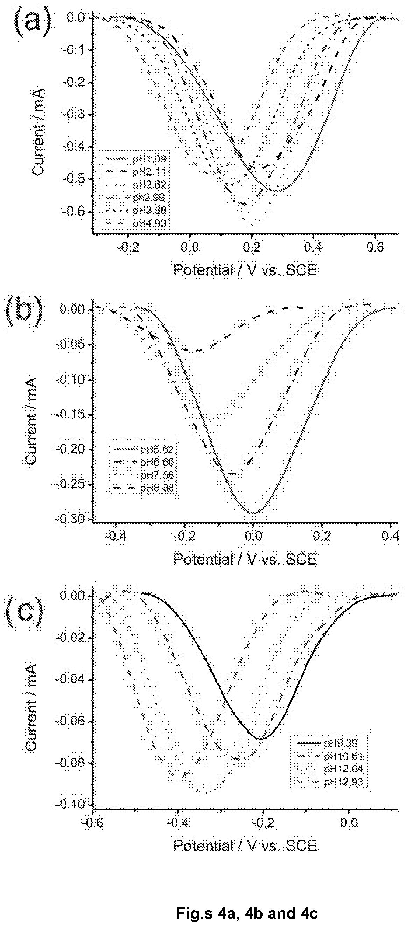

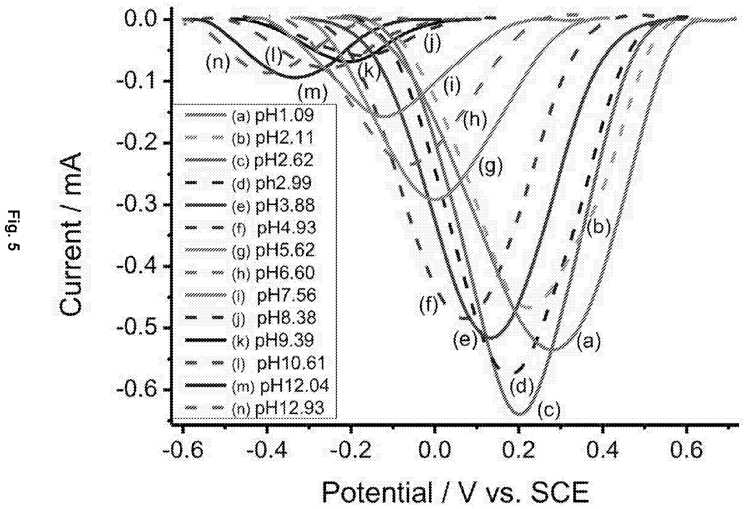

Using a range of 0.01 M pH buffer solutions, a single peak was observed by scanning cathodically from positive to negative potentials in square wave voltammetry as shown in Figure 4. Since the pH for the 0.01 M HCl/KCl buffer solution was pH2.11, a 0.1 M HCl/KCl buffer solution was investigated and included for completeness to observe the response between the peak potential and full pH range. The pH of the 0.1M HCl/KCl buffer in this case was 1.09. Three sets of reductions were performed which corresponds to solutions in the low (0.0 - 5.0), neutral (5.0 - 9.0) and high (9.0 - 14.0) pH range using HCl/ KCl and citrate buffer solutions, monosodium phosphate/ disodium phosphate buffer solutions and sodium carbonate/ bicarbonate and sodium hydroxide solutions, respectively. Using HCl/ KCl and citrate buffers, as in Figure 4(a), the reduction peak potential shifts from 222 mV at pH 2.11 to 71 mV at pH 4.93. Similarly, for other buffers shown in Fig 4 (b) and (c), an increase in pH from 5.62 to 8.38 resulted in a peak potential shift from 1 mV to -172 mV, and for pH 9.39 to 12.9, the reduction peak potential changes from -207 mV to -402 mV, respectively. The potential window was increased for higher pH solutions to accommodate for the shift in potential with pH. A composite of all the reductions peaks in different buffer solutions can be seen in Figure 5. It can be observed that by increasing pH, peak potentials shift in the cathodic direction towards more negative values. At high pH, there are fewer protons available for the $2H^+/2e^-$ reduction process, and as a result, probably limits the extent of quinone reduction resulting in less well resolved signals and lower currents. Background correction and smoothing of the signals allowed enhancement of the peaks for analysis. Both methods were performed using GPES software; the background correction involved subtracting a 2$^{nd}$ order polynomial baseline curve from the raw data, whilst background noise was smoothed using the Savitzky and Golay smoothing filter [1,2].

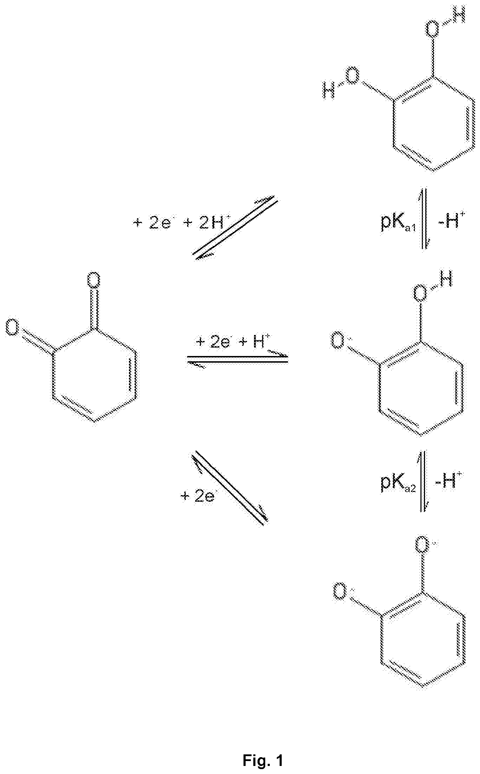

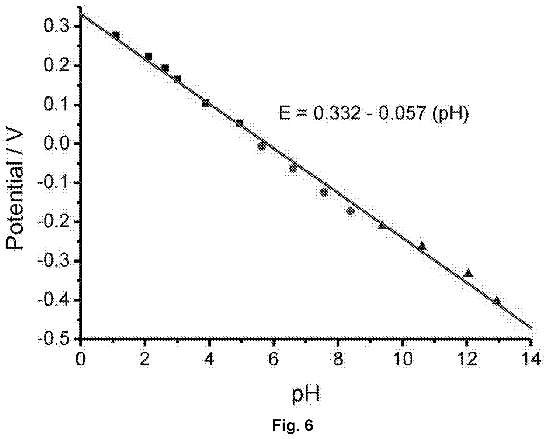

Polishing of the EPPG electrode for 20 minutes prior to each experiment exposed surface quinone functional groups, which were used to explore the electrode response to varying pH. By measuring the peak potential of the reduction peaks in SWV and plotting against pH, a linear response could be seen in the pH 1.0 - 13.0 range, as shown in Figure 6. The gradient of the slope was 57.0 $\pm$ 1.0 mV per pH which is consistent with a linear Nernstian response corresponding to a two-electron, two-proton electrochemical process where m, n = number of protons and electrons involved in the redox process, respectively, T = 298 K. The linear slope produced from the peak potential vs. pH graph highlights the pH sensitive nature of the quinone groups on the surface of the EPPG electrode. By examining the $pK_a$ values for ortho-benzoquinone in aqueous solution, $pK_{a1}$ 9.25 and $pK_{a2}$ 13 (Figure 1), it is possible to infer significant differences in $pK_a$ must exist between such molecules in bulk solution and similar structures present at the surface. If the surface quinones showed similar $pK_a$ values to those displayed in solution, the present inventors expected changes in gradient at high pH around pH 9.0 and 13.0. However, the gradient consistent for m = 2 was observed for the full aqueous pH 1.0 - 13.0 range. It can be assumed that deprotonation of the surface hydro-orthoquinone molecules does not occur below ca. pH 13, and so extensive pH measurements can be carried out even at high pH without the need for modification of the electrode to achieve a linear Nernstian response.

Example 3

The present inventors considered that the mechanism of the quinone reduction in neutral solutions, involving a 2 proton / 2 electron process, could lead to charged intermediates being possibly formed. At neutral pHs, they considered this could be a semi-quinone species.

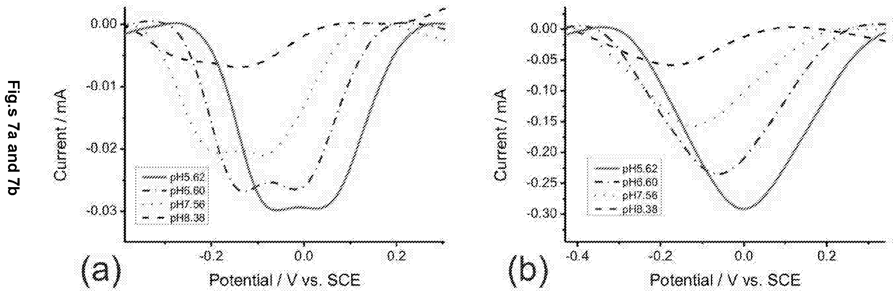

To explore the possibilities of semi-quinones contributing to the SWV signal, the SWV parameters were altered, and the amplitude lowered from 200 mV to 20 mV. It was observed that phosphate buffers within the pH range 5.0 - 9.0 produced a double peak or splitting of the peak. Their reduction in SWV with amplitude 20 mV can be seen Figure 7(a) whilst the overcompensated scans at 200 mV amplitude can be seen in Figure 7(b). Lowered amplitude parameters with buffers outside of the neutral pH range were also investigated, but produced just one single peak, which suggests that the semiquinone intermediate is stabilised observed only in environments around pH 7.

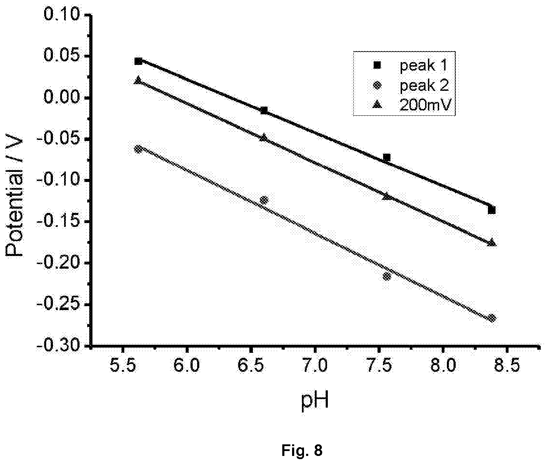

The reduction potential of the double peaks shown in Figure 7(a) was plotted in Figure 8, together with the reduction peaks obtained with amplitude 200mV. The circles and squares represent the two positions of the double peak reduction, whilst the triangles correspond to the peaks with amplitude 200 mV. It can be seen that the position of the reduction peaks at the higher amplitude is intermediate between the split peak values.

Example 4

Investigating the effects of changing ionic strength and buffer concentration

Having calibrated successfully for the 0.01 M buffer solutions, further investigation into higher concentration solutions were performed to see the effects of increasing ionic strength.

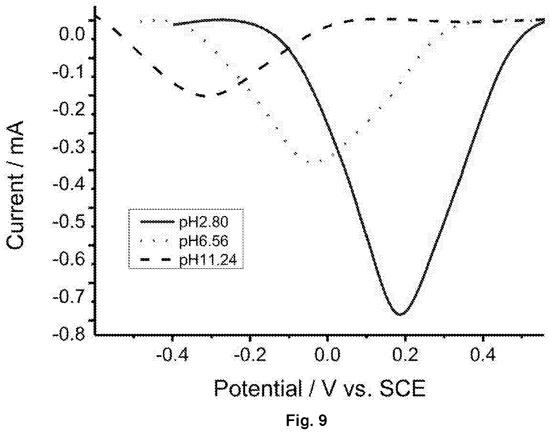

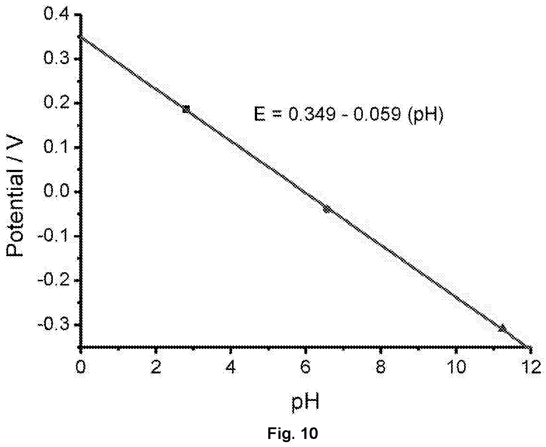

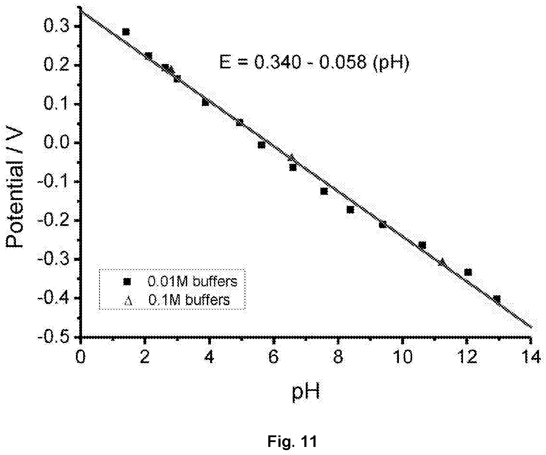

0.1 M citrate, phosphate and carbonate buffer solutions all produced a single reduction peak as seen in Figure 9. Taking the reduction peak potential and plotting against pH, as in Figure 10, the calibration gives a linear response with a gradient of 59.0 mV/ pH. By plotting these points against the original calibration plot across the entire pH range, it is possible to see from Figure 11 that the results (shown as blue triangles) fits well onto the previous results, given as squares. A line of best fit going through both the 0.01 M and 0.1 M results with a gradient of 58.0 mV/ pH could be produced using the parameters as specified earlier.

It can be concluded that an EPPG electrode can be used as a pH sensor over the aqueous range 1.0 - 13.0 in solutions of variable ionic strength. Taking the reduction potential of the EPPG in SWV gave reduction peaks which can be easily analysed. Quantitative analysis of the reduction peak potential can thus be used to produce a linear reduction peak potential against pH calibration plot.

In the Examples above, for an unmodified edge plane pyrolytic graphite electrode (EPPG), the SWV peak potential for the reduction of surface quinones has been shown to respond linearly with solutions of different pH such that a calibration plot ranging from pH 1.0 - 13.0 can be successfully formed. A Nernstian response corresponding to a 2 proton/ 2 electron system lends itself to the use of an EPPG as a simple, easy to use, reagentless and cheap pH sensing material.

Example 5

Investigating the EPPG electrode response to pH at higher temperature

The experiment above was repeated at an increased temperature of 310 K and the EPPG electrode was investigated in different 0.01 M pH buffer solutions. The working temperature within the Faraday cage was maintained at 310 K, whilst the solutions and experimental apparatus were allowed to reach thermal equilibrium.

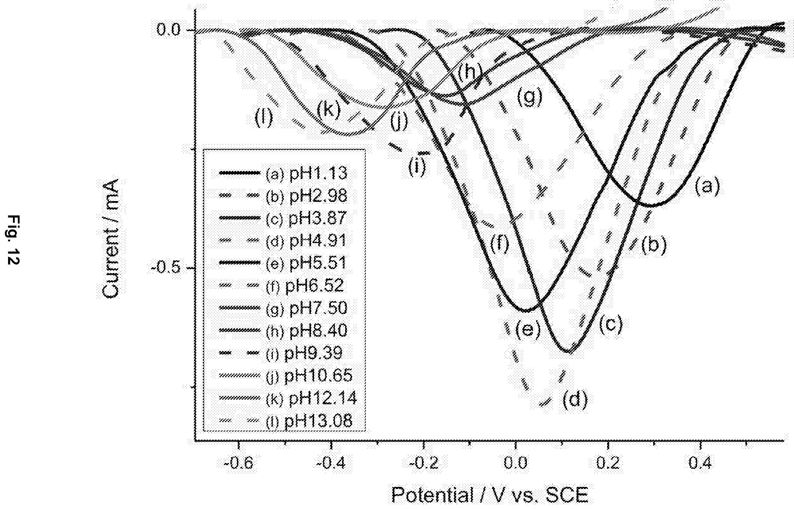

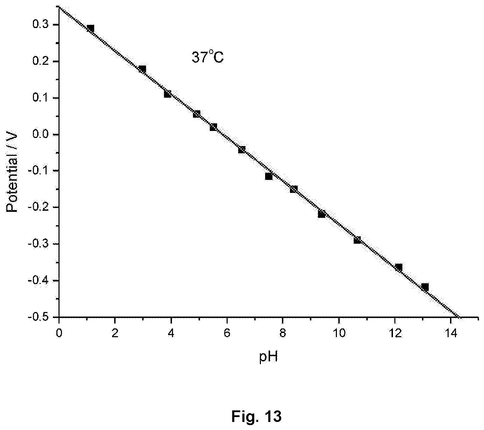

A set of square wave peaks were produced (shown in Figure 12) and it could be seen that with increasing pH, there was a corresponding reduction peak potential shift towards more cathodic values, as expected. Taking the reduction peak potential values at 310 K and plotting the pH against potential, a linear response could be seen in the calibration plot across the entire pH range (shown in Figure 13). The calibration gave an increased gradient at higher temperatures, which agreed well with the Nernst equation.

References mentioned herein or otherwise useful for background

[1] A. Savitzky, M.J.E. Golay, Smoothing and differentiation of data by simplified least squares procedures. Anal. Chem. 36 (1964) 1627-1639.

[2] M.U.A. Bromba, H. Ziegler, Application hints for Savitzky-Golay digital smoothing filters. Anal. Chem. 53 (1981) 1583-1586.

**Claims**

1. A method for detecting pH, the method comprising:

   providing an electrode comprising a carbon material having at least one plane of carbon atoms, wherein the plane of carbon atoms has been oxidised at its edge, such that quinone structures or hydroquinone structures form part of the plane and are present at the edge of the plane,
   contacting a sample with the quinone or hydroquinone structures of the plane of carbon atoms,
   carrying out an electrochemical test to reduce the quinone structures or oxidise the hydroquinone structures and determine the potential at which the reduction of the quinone structures occurs or at which the oxidation of the hydroquinone structures occurs,
   using the potential at which the reduction or oxidation occurs to calculate the pH of the sample.

2. A method according to claim 1, wherein the carbon material is selected from edge plane pyrolytic graphite, graphene, basal plane pyrolytic graphite, glassy carbon and carbon microfibres.

3. A method according to claim 1 or claim 2, wherein the method involves a voltammetry technique to determine the potential at which the reduction of the quinone structures or oxidation of the hydroquinone structures occurs.

4. A method according to claim 3, wherein the voltammetry technique is a pulse voltammetry technique.

5. A method according to claim 4, wherein the voltammetry technique is selected from square wave voltammetry, normal pulse voltammetry, differential pulse voltammetry and sampled current polarography.

6. A method according to any one of claims 3 to 5, wherein a peak of current is seen in the voltammetry technique at the potential at which the reduction of the quinone structures occurs or at which the oxidation of the hydroquinone structures occurs.

7. A method according to any one of the preceding claim, wherein a predetermined relationship between the potential at which the reduction of the quinone structures occurs or at which the oxidation of the hydroquinone structures occurs and pH is used to calculate the pH of the sample.

8. A method according to claim 7, wherein the predetermined relationship is as stated in formula (a)

$$E = C - n(pH) \qquad\qquad\qquad \text{formula (a)},$$

   wherein E is the potential at which the reduction of the quinone structures occurs or at which the oxidation of the hydroquinone structures occurs, C is constant and n is a coefficient, with C and n having been determined in a calibration step and (pH) is the value of pH of the sample.

9. A method according to any one of the preceding claims, wherein the carbon material is not associated with any species that does not form part of the plane of carbon atoms and that is a redox active material sensitive to a change in pH.

10. A method according to any one of the preceding claims, wherein the carbon material is associated with a redox active material that is insensitive to a change in pH.

11. A method according to any one of the preceding claims, wherein the carbon material is edge plane pyrolytic graphite, the method involves a square wave voltammetry technique and a peak of current is seen in the voltammetry technique at the potential at which the reduction of the quinone structures occurs or at which the oxidation of the hydroquinone structures occurs.

12. A method according to any one of the preceding claims, wherein the carbon material is edge plane pyrolytic graphite that is pure or substantially pure, aside from oxidation of the carbon atoms at the edge of the plane.

13. A method according to any one of the preceding claims, wherein the method is used to determine a pH in the range of 1 to 14.

14. An apparatus for detecting pH, the apparatus comprising an electrode comprising a carbon material having at least one plane of carbon atoms, wherein the plane of carbon atoms has been oxidised at its edge, such that quinone structures or hydroquinone structures form part of the plane and are present at the edge of the plane, the apparatus adapted to:

contact a sample with the quinone or hydroquinone structures of the plane of carbon atoms of the carbon material, carry out an electrochemical test to reduce the quinone structures or oxidise the hydroquinone structures and determine the potential at which the reduction of the quinone structures occurs or at which the oxidation of the hydroquinone structures occurs, and
use the potential at which the reduction or oxidation occurs to calculate the pH of the sample.

15. An apparatus for detecting pH according to claim 14, wherein the apparatus is further adapted to carrying out a method according to any one of claims 2 to 13.

**Patentansprüche**

1. Verfahren zum Nachweis von pH, wobei das Verfahren umfasst:

eine Elektrode aus einem Kohlenstoffmaterial mit mindestens einer Kohlenstoffatomebene bereitstellen, wobei die Kohlenstoffatomebene an ihrem Rand oxidiert worden ist, so dass Chinonstrukturen oder Hydrochinonstrukturen einen Teil der Ebene bilden und am Rand der Ebene vorliegen;
eine Probe mit den Chinon- oder Hydrochinonstrukturen der Kohlenstoffatomebene in Kontakt bringen;
einen elektrochemischen Test durchführen, um die Chinonstrukturen zu reduzieren oder die Hydrochinonstrukturen zu oxidieren und das Potential zu bestimmen, bei dem die Reduktion der Chinonstrukturen oder die Oxidation der Hydrochinonstrukturen auftritt;
den pH-Wert der Probe mit Hilfe des Potentials berechnen, bei dem die Reduktion oder Oxidation auftritt.

2. Verfahren gemäß Anspruch 1, wobei das Kohlenstoffmaterial zusammengesetzt ist aus pyrolytischem Graphit der Ebenenkante, Graphen, pyrolytischem Graphit der Basalebene, glasartigem Kohlenstoff und/oder Kohlenstoffmikrofasern.

3. Verfahren gemäß Anspruch 1 oder 2, wobei das Verfahren eine voltammetrische Technik umfasst, um das Potential zu bestimmen, bei dem die Reduktion der Chinonstrukturen oder die Oxidation der Hydrochinonstrukturen auftritt.

4. Verfahren gemäß Anspruch 3, wobei die voltammetrische Technik eine pulsvoltammetrische Technik ist.

5. Verfahren gemäß Anspruch 4, wobei die voltammetrische Technik ausgewählt ist aus der Rechteckwellenvoltammetrie, der normalen Pulsvoltammetrie, der Differenzpulsvoltammetrie und/oder der probenbasierten Strompolarographie.

6. Verfahren gemäß einem der Ansprüche 3 bis 5, wobei bei der voltammetrischen Technik der Spitzenstrom bei dem Potential auftritt, bei dem die Reduktion der Chinonstrukturen oder die Oxidation der Hydrochinonstrukturen auftritt.

7. Verfahren gemäß einem der vorhergehenden Ansprüche, wobei zur Berechnung des pH-Wertes der Probe ein vorbestimmtes Verhältnis zwischen dem Potential, bei dem die Reduktion der Chinonstrukturen oder die Oxidation der Hydrochinonstrukturen auftritt, und dem pH-Wert verwendet wird.

8. Verfahren gemäß Anspruch 7, wobei das vorbestimmte Verhältnis in Formel (a) ausgedrückt wird

$$E = C - n(pH) \quad \text{Formel (a)};$$

wobei "E" das Potential ist, bei dem die Reduktion der Chinonstrukturen oder die Oxidation der Hydrochinonstrukturen auftritt, "C" konstant ist und "n" ein Koeffizient ist, wobei "C" und "n" in einem Kalibrierungsschritt bestimmt wurden und (pH) der pH-Wert der Probe ist.

9. Verfahren gemäß einem der vorhergehenden Ansprüche, wobei das Kohlenstoffmaterial mit keinem Material verbunden ist, das nicht einen Teil der Kohlenstoffatomebene und ein aktives Redox-Material darstellt, das gegenüber einer Änderung des pH-Wertes empfindlich reagiert.

10. Verfahren gemäß einem der vorhergehenden Ansprüche, wobei das Kohlenstoffmaterial mit einem aktiven Redox-Material verbunden ist, das gegenüber einer Änderung des pH-Wertes unempfindlich reagiert.

11. Verfahren gemäß einem der vorhergehenden Ansprüche:
wobei das Kohlenstoffmaterial pyrolytischer Graphit der Ebenenkante ist, das Verfahren eine rechteckwellenvoltammetrische Technik umfasst und bei der voltammetrischen Technik der Spitzenstrom bei dem Potential auftritt, bei dem die Reduktion der Chinonstrukturen oder die Oxidation der Hydrochinonstrukturen auftritt.

12. Verfahren gemäß einem der vorhergehenden Ansprüche, bei dem das Kohlenstoffmaterial ein pyrolytischer Graphit der Ebenenkante ist, der abgesehen von der Oxidation der Kohlenstoffatome an der Ebenenkante rein oder im Wesentlichen rein ist.

13. Verfahren gemäß einem der vorhergehenden Ansprüche, wobei das Verfahren zur Bestimmung eines pH-Wertes im Bereich von 1 bis 14 verwendet wird.

14. Vorrichtung zum Erfassen des pH-Wertes, wobei die Vorrichtung eine Elektrode aus einem Kohlenstoffmaterial mit mindestens einer Kohlenstoffatomebene umfasst, wobei die Kohlenstoffatomebene an ihrem Rand oxidiert worden ist, so dass Chinonstrukturen oder Hydrochinonstrukturen einen Teil der Ebene bilden und am Rand der Ebene vorliegen und wobei die Vorrichtung dafür ausgelegt ist:

eine Probe mit den Chinon- oder Hydrochinonstrukturen der Kohlenstoffatomebene des Kohlenstoffmaterials in Kontakt zu bringen;
einen elektrochemischen Test durchzuführen, um die Chinonstrukturen zu reduzieren oder die Hydrochinonstrukturen zu oxidieren und das Potential zu bestimmen, bei dem die Reduktion der Chinonstrukturen oder die Oxidation der Hydrochinonstrukturen auftritt; und
den pH-Wert der Probe mit Hilfe des Potentials zu berechnen, bei dem die Reduktion oder Oxidation auftritt.

15. Vorrichtung zum Erfassen des pH-Wertes gemäß Anspruch 14, wobei die Vorrichtung ferner dafür ausgelegt ist, ein Verfahren gemäß einem der Ansprüche 2 bis 13 auszuführen.

**Revendications**

1. Un procédé de détection du pH, le procédé comprenant :

fournir une électrode comprenant un matériau en carbone ayant au moins un plan d'atomes de carbone, dans lequel le plan d'atomes de carbone a été oxydé à son bord, de telle sorte que des structures quinones ou des structures hydroquinones font partie du plan et sont présentes au bord du plan,
la mise en contact d'un échantillon avec les structures quinone ou hydroquinone du plan des atomes de carbone,
la réalisation d'un essai électrochimique pour réduire les structures quinones ou oxyder les structures hydroquinones et déterminer le potentiel auquel la réduction des structures quinones se produit ou auquel l'oxydation des structures hydroquinones se produit,
en utilisant le potentiel auquel la réduction ou l'oxydation se produit pour calculer le pH de l'échantillon.

2. Un procédé selon la revendication 1, dans lequel le matériau en carbone est choisi parmi le graphite pyrolytique du plan de bord, le graphène, le graphite pyrolytique du plan basal, le carbone vitreux et les microfibres de carbone.

3. Un procédé selon la revendication 1 ou la revendication 2, dans lequel le procédé implique une technique de voltampérométrie pour déterminer le potentiel auquel la réduction des structures quinones ou l'oxydation des structures hydroquinones se produit.

**4.** Un procédé selon la revendication 3, dans lequel la technique de voltampérométrie est une technique de voltampérométrie par impulsions.

**5.** Un procédé selon la revendication 4, dans lequel la technique de voltampérométrie est choisie parmi la voltampérométrie à ondes carrées, la voltampérométrie à impulsions normales, la voltampérométrie à impulsions différentielles et la polarographie par courant échantillonnée.

**6.** Un procédé selon l'une quelconque des revendications 3 à 5, dans lequel un pic de courant est observé dans la technique de voltampérométrie au potentiel auquel la réduction des structures quinones se produit ou auquel l'oxydation des structures hydroquinones se produit.

**7.** Un procédé selon l'une quelconque des revendications précédentes, dans lequel une relation prédéterminée entre le potentiel auquel la réduction des structures quinones se produit ou auquel l'oxydation des structures hydroquinones se produit et le pH est utilisée pour calculer le pH de l'échantillon.

**8.** Un procédé selon la revendication 7, dans lequel la relation prédéterminée est telle qu'indiquée dans la formule (a)

$$E = C - n(pH) \qquad\qquad\qquad \text{formule (a)},$$

dans laquelle E est le potentiel auquel la réduction des structures quinones se produit ou auquel l'oxydation des structures hydroquinones se produit, C est constant et n est un coefficient, C et n ayant été déterminés dans une étape d'étalonnage et (pH) étant la valeur du pH de l'échantillon.

**9.** Un procédé selon l'une quelconque des revendications précédentes, dans lequel le matériau en carbone n'est associé à aucune espèce qui ne fait pas partie du plan des atomes de carbone et qui est un matériau actif redox sensible à un changement de pH.

**10.** Un procédé selon l'une quelconque des revendications précédentes, dans lequel le matériau en carbone est associé à un matériau actif redox qui est insensible à un changement de pH.

**11.** Un procédé selon l'une quelconque des revendications précédentes, dans lequel le matériau en carbone est du graphite pyrolytique du plan de bord, le procédé implique une technique de voltampérométrie à ondes carrées et un pic de courant est observé dans la technique de voltampérométrie au potentiel auquel la réduction des structures quinones se produit ou auquel l'oxydation des structures hydroquinones se produit.

**12.** Un procédé selon l'une quelconque des revendications précédentes, dans lequel le matériau en carbone est du graphite pyrolytique du plan de bord qui est pur ou considérablement pur, à l'exception de l'oxydation des atomes de carbone au bord du plan.

**13.** Un procédé selon l'une quelconque des revendications précédentes, dans lequel le procédé est utilisé pour déterminer un pH compris entre 1 et 14.

**14.** Un appareil pour détecter le pH, l'appareil comprenant une électrode comprenant un matériau en carbone ayant au moins un plan d'atomes de carbone, dans lequel le plan d'atomes de carbone a été oxydé à son bord, de sorte que des structures quinones ou des structures hydroquinones font partie du plan et sont présentes au bord du plan, l'appareil étant adapté à :

la mise en contact d'un échantillon avec les structures quinones ou hydroquinones du plan des atomes de carbone du matériau en carbone,
la réalisation d'un essai électrochimique pour réduire les structures quinones ou oxyder les structures hydroquinones et déterminer le potentiel auquel la réduction des structures quinones se produit ou auquel l'oxydation des structures hydroquinones se produit, et
l'utilisation du potentiel auquel la réduction ou l'oxydation se produit pour calculer le pH de l'échantillon.

**15.** Un appareil pour détecter le pH selon la revendication 14, dans lequel l'appareil est en outre adapté pour réaliser un procédé selon l'une quelconque des revendications 2 à 13.

Fig. 1

**Fig. 2**

Fig. 3

**Fig.s 4a, 4b and 4c**

Fig. 5

Fig. 6

Fig.s 7a and 7b

Fig. 8

Fig. 9

Fig. 10

E = 0.340 - 0.058 (pH)

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5798075 A
- WO 2005085825 A
- US 5223117 A

**Non-patent literature cited in the description**

- **H. DÜSSEL.** *Electroanalysis,* 1995, vol. 7 (9), 889-894
- **BANKS, C.E. ; COMPTON, R.G.** *Analyst,* 2006, vol. 131, 15-21
- **A. SAVITZKY ; M.J.E. GOLAY.** Smoothing and differentiation of data by simplified least squares procedures. *Anal. Chem.,* 1964, vol. 36, 1627-1639
- **M.U.A. BROMBA ; H. ZIEGLER.** Application hints for Savitzky-Golay digital smoothing filters. *Anal. Chem.,* 1981, vol. 53, 1583-1586